# EUROPEAN PATENT SPECIFICATION

(11) **EP 3 170 286 B1**
(45) Date of publication and mention of the grant of the patent: **27.12.2017**
(21) Application number: 15738022.1
(22) Date of filing: 08.07.2015
(51) Int. Cl.: H04L 12/24, H04L 12/26, H04L 12/721

(54) **SITE DETECTION IN A COMMUNICATIONS NETWORK**
STANDORTERKENNUNG IN KOMMUNIKATIONSNETZWERKEN
DÉTECTION DE SITE DANS UN RÉSEAU DE COMMUNICATION

(30) Priority: 17.07.2014 SE 1450897; 17.07.2014 US 201414333738
(43) Date of publication of application: 24.05.2017
(73) Proprietor: Hive Streaming AB, 114 49 Stockholm (SE)
(72) Inventor: NAIEM, Amgad, S-114 49 Stockholm (SE); EL-BELTAGY, Mohammed, S-114 49 Stockholm (SE); SEIF, Sondos, S-114 49 Stockholm (SE)
(74) Representative: Kransell & Wennborg KB
(86) International application number: PCT/EP2015/065609
(87) International publication number: WO 2016/008784

(56) References cited:
- US-A1- 2011 138 073
- US-A1- 2011 296 051
- DOYLE J ET AL: "CCIE PROFESSIONAL DEVELOPMENT. ROUTING TCP/IP. VOLUME 2: A DETAILED EXAMINATION OF EXTERIOR ROUTING PROTOCOLS AND ADVANCED IP ROUTING ISSUES (CISCO PRESS, ISBN 1-57870-089-2)", CCIE PROFESSIONAL DEVELOPMENT: ROUTING TCP/IP, XX, XX, vol. 2, 1 January 2001 (2001-01-01), XP007901037,

## Description

### TECHNICAL FIELD

The invention relates to a method and device of categorization of endpoint nodes into sites in a communications network. The invention further relates to a computer program performing the method according to the present invention, and a computer program product comprising computer readable medium having the computer programs embodied therein.

### BACKGROUND

Corporate networks generally have a large number of endpoint nodes, such as stationary computers, laptops, mobile phones, tablets, etc., in each site or location in the network. These endpoint nodes are connected to each other via one or more routers to form sub networks within a site, and a unique local Internet Protocol (IP) address must be assigned to each endpoint node in the site.

A site can thus contain multiple subnets, in particular if the site contains a large number of endpoint nodes. Network management in corporate networks is done by keeping track of IP range of each subnet router and identify the IP ranges that exist in each site.

For corporations having many sites in geographically dispersed locations, the network at each site may be managed by on-site network managers. Accordingly, the IP ranges of subnets within the site changes continuously and tracking of IP ranges becomes complex and time-consuming . This may be problematic for e.g. service providers installing software or infrastructure for which that information is important from a service performance perspective. Further, the process of managing a great number of subnets globally may be expensive and complex. There could be numerous services running inside a given corporation where site information is crucial for performance. Examples of such services are corporate live streaming, video conferencing, caching servers, etc.

"CCIE Professional Development. Routing TCP/IP. Volume II: A detailed examination of exterior routing protocols and advanced IP routing issues", by Doyle et al, discloses in Chapter 2 an introduction to Border Gateway Protocol 4, which in view of earlier versions of the protocol is classless.

US 2011/138073 discloses a connection destination selection apparatus, in a network in which one reception device receives data distributed from a data distribution device and transfers the data received to another one of a plurality of reception devices which is connected to the one reception device,.

US 2004/264385 discloses a system that facilitates determining the network topology in a peer-to-peer network. The system operates by performing a tracerouting operation to obtain a traceroute from a first client to a directory server, wherein a traceroute describes a path through which a packet travels between the first client and the directory server, including addresses of the routers through which the packet travels. Next, the system sends the traceroute to the directory server from the first client. The directory server then uses the traceroute to build a router graph that represents the topology of the peer-to-peer network.

US 5,805,819 discloses method and apparatus for grouping the network entities that belong to a network system into logical groups, and generating a display of the network based on the logical groups. In the highest level display, a single visual indicator, such as an icon, is used to represent each logical group.

US 6,915,309 discloses a method for automatically generating a network topology for a directory service is provided, wherein the topology represents network sites and site links in a distributed computing environment. An implementation of the technique generates a replication topology used for populating the directory service. The topology is generated based on router interface information obtained from router configuration files.

### SUMMARY

An object of the present invention is to solve, or at least mitigate, this problem in the art and to provide an improved method of discovering the site structure of these large networks.

This object is attained in a first aspect of the present invention by a method of categorizing endpoint nodes into sites in a communications network. The method comprises acquiring information pertaining to tracing of a route from each of a plurality of the endpoint nodes via a number of routing nodes in the communications network, which information identifies the routing nodes encountered in each traced route. The method further comprises performing a comparison, for each of the plurality of endpoint nodes with the remaining ones of the plurality of endpoint nodes, of the acquired information for a selected number of routing nodes closest to the endpoint node for each traced route. Moreover, the method comprises categorizing the endpoint nodes having at least one routing node in common among the selected number of routing nodes as belonging to a same site.

This object is attained in a second aspect of the present invention by a device configured to categorize endpoint nodes into sites in a communications network, the device comprising a processing unit being configured to acquire information pertaining to tracing of a route of each of a plurality of the endpoint nodes via a number of routing nodes in the communications network, said information identifying the routing nodes encountered in each traced route. Further, the processing unit is configured to perform a comparison, for each of the plurality of endpoint nodes with the remaining ones of the plurality of endpoint nodes, of the acquired information for a selected number of routing nodes closest to the endpoint node for each traced route, and categorize the endpoint nodes having at least one routing node in common among the selected number of routing nodes as belonging to a same site.

Further provided is a computer program performing the method according to the present invention, and a computer program product comprising computer readable medium having the computer programs embodied therein.

Thus, a route is traced from a respective endpoint node via a number of routers in the communications network. This could be performed e.g. by using the well-known *traceroute* computer network diagnostic tool. Typically, the route of each endpoint node in the network, or at least each end point in the network to subsequently be categorized into a site, is traced to a device such as a central data centre or a central corporate server. For performing a route trace, each end point node has client software installed that traces the route to the target central server. Information pertaining to the result of the respective traced route is sent to a device such as a network analysis server, which information identifies the routers encountered in each traced route.

Thereafter, a comparison of the acquired information for a selected number t of routers closest to the respective endpoint node for each traced route will be performed by the network analysis server, in order to identify router(s) common to the respective traced route. The endpoint nodes having at least one router in common among the t selected routers closest to the respective endpoint node is categorized as belonging to a same site.

Advantageously, the present invention facilitates categorization of endpoint nodes into sites for the subnets formed by a router and its associated endpoint nodes. This alleviates the need to perform a process at each endpoint node to identify to which site its subnet belongs. It further makes it easier to launch services that would make good use of such categorization without costly configuration and hand tuning.

Corporations typically have to maintain tables that keep track of which IP ranges (more or less synonymous with subnets) belong to each site. However, maintaining accurate tables is often burdensome and the tables that are at hand for a given point in time may be outdated due to constant changes occurring in the network. There is a cost associated with updating and uploading the most recent version of such a table to the service/software that might need the table. Outdated and non-accurate IP tables are thus problematic. An advantage of the present invention is that the endpoint nodes and their subnets can be categorized into sites, and the IP ranges for each subnet may thus be created more or less automatically. Thereby, the burden of manual table construction is alleviated. Further, a timely view of network sites and the endpoint nodes belonging to the respective network site is reliably provided and can thus be used by services/software that may depend upon this information.

The categorization of endpoint nodes into sites further facilitates delivering content to endpoint nodes in a corporate network using P2P approaches. By exploiting the proximity measure defined by a common router linking sites together, a more efficient order for distributing the streaming content can be established. By having peers preferentially download/upload content from other peers in their site, the P2P traffic can be kept local and outgoing and incoming site bandwidth better conserved. Pushing this further to having peer preferentially download/upload content from other peers in their subnet or neighbouring subnets within a site results in better content delivery performance while improving traffic locality even further. Additionally, knowledge of the site structure would allow an enterprise the limit the impact of security breaches when such breaches occur, by selectively cutting of, or quarantining, parts of the their network.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Figure 1 illustrates a corporate network in which the present invention advantageously may be implemented;
Figure 2 illustrates a communications network in which a device according to an embodiment of the present invention is implemented;
Figure 3 further illustrates a flowchart of a method of categorizing endpoint nodes in sites according to an embodiment of the present invention;
Figure 4 illustrates a further embodiment of the present invention, where a further three routers and two endpoint nodes have been added to the communications network of Figure 2; and
Figure 5 illustrates a further embodiment of the present invention, where a further endpoint node has been added to the communications network of Figure 4.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

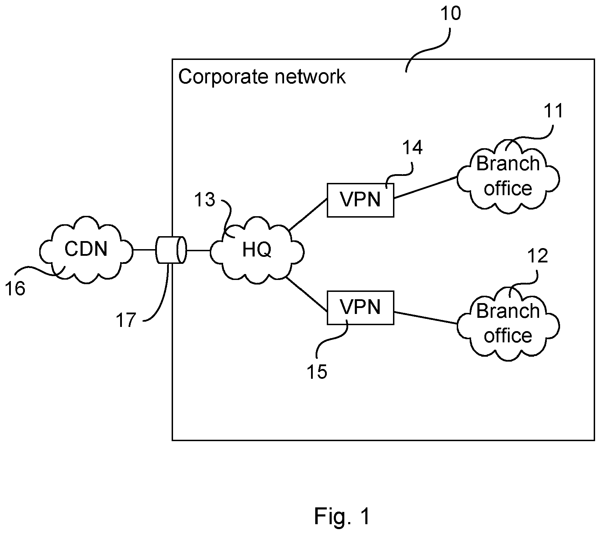

Figure 1 illustrates a corporate network 10 in which the present invention advantageously may be implemented. The corporate network 10 could be setup e.g. at a corporation or a public authority where multiple sites 11, 12 representing geographically distributed offices e.g. are connected to a main site 13 via fixed Virtual Private Network (VPN) links 14, 15, respectively.

Traffic from and to the public Internet, e.g. from/to a Content Data Network (CDN) 16, may enter the corporate network 10 via a gateway (GTW) link 17 of fixed capacity connected to the main site 13. The sites 11, 12, 13 are typically arranged according to a given hierarchy within the corporate network 10. At the highest level of the hierarchy is the main site 13, typically being the head quarter (or regional head quarter) of the organization implementing the corporate network 10. For example, in a corporate setting, the main site 13 may be a regional division of a multinational cooperation, while the regional sites 11, 12, may represent branch offices in the form of for instance two productions plants in that region.

In the sites, routers receive and forward packets to client nodes (not shown in Figure 1) such as e.g. television sets, mobile phones, computers, tablets, smart phones, etc. Peer-to-peer (P2P) architectures can be used for transferring data between the routers and the client nodes.

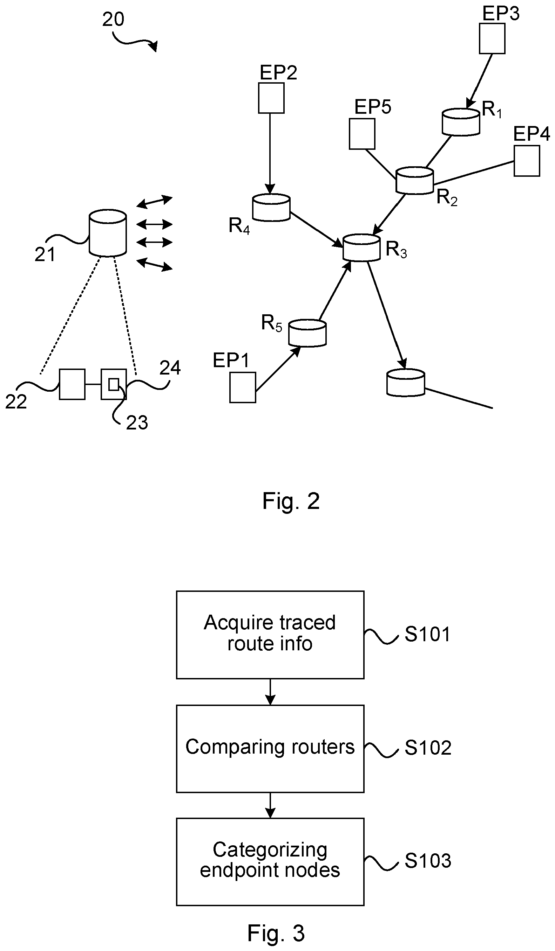

Figure 2 illustrates a communications network 20 in which a device 21 according to an embodiment of the present invention is implemented. The network 20 could for instance be arranged in any one of the branch office sites 11, 12 of Figure 1. Now, the network 20 is exemplified to comprise five client nodes referred to as endpoint nodes EP1-EP5, and four routers R1-R4. In a real setting, the network 20 could comprise hundreds or even thousands of client nodes, where not all client nodes necessarily are endpoint nodes, but could be intermediate nodes. For instance, in case a P2P arrangement is implemented, the first router R1 could forward data to an intermediate node (not shown) which in its turn forwards part or all of the data to the third endpoint node EP3.

Figure 3 further illustrates a flowchart of a method of categorizing endpoint nodes in sites according to an embodiment of the present invention. This will be described with further reference to structural elements of Figure 2.

In a first step S101, a route is traced from the respective endpoint node via a number of routers in the communications network 20. This could be performed e.g. by using the well-known *traceroute* computer network diagnostic tool. Typically, the route of each endpoint node in the network, or at least each end point in the network to subsequently be categorized, is traced to a device such as a central data centre or a central corporate server (not shown in Figure 2). For performing a route trace, each end point node has client software installed that traces the route to the target central server. Information pertaining to the result of the respective route traced is sent to a device such as a network analysis server 21 according to an embodiment of the present invention. Alternatively, the network analysis server 21 could effect a trace of the respective from the central server to each endpoint node. Thus, in step S101, the network analysis server 21 acquires, from the endpoint nodes (or the central server), information pertaining to the tracing of the route from the respective endpoint node via the routers, which information identifies the routers encountered in each traced route.

Thereafter, in step S102, a comparison of the acquired information for a selected number t of routers closest to the respective endpoint node for each traced route will be performed by the network analysis server 21, in order to identify router(s) common to the respective traced route.

In the exemplified embodiment, the selected number of routers to compare is 2, i.e. t = 2. When performing the trace of a route, the respective endpoint node acquires information identifying the routers encountered in each traced route. It should be noted that even though a large number of routers typically is traversed when performing a standard route trace procedure, it would for the sake of site detection suffice to traverse t routers in each route.

Thus, the first endpoint node EP1 performs a route trace via the fifth router R5 and the third router R3, the second endpoint node EP2 performs a route trace via the forth router R4 and the third router R3, and so on. Table 1 in the below summarizes the routers identified in each traced route for t = 2.

**Table 1.**

| Endpoint node | Routers encountered for t = 2 (router list) |
|---|---|
| EP1 | R5, R3 |
| EP2 | R4, R3 |
| EP3 | R1, R2 |
| EP4 | R2, R3 |
| EP5 | R2, R3 |

Based on the information of Table 1, a pairwise comparison is performed by the network analysis server 21 for each endpoint node in step S102, where it initially can be concluded that the first endpoint node EP1 has the router R3 in common with EP2, EP4 and EP5, but has no routers in common with the third endpoint node EP3.

The encountered routers of each endpoint node are compared to the encountered routers of each of the other endpoint nodes, i.e. the router list for each endpoint node is compared to the router list of each of the other endpoint nodes. Thus:
1. The EP1 router list is compared (as just described) with the respective router list of the other four endpoint nodes EP2, EP3, EP4 and EP5, resulting in EP1 having the third router R3 in common with EP2, EP4 and EP5.
2. The EP2 router list is compared with the respective router list of the other four endpoint nodes EP1, EP3, EP4 and EP5, resulting in the same common router R3 as the comparison performed for EP1; no new information is hence revealed in addition to that of the previous step.
3. The EP3 router list is compared with the respective router list of the other four endpoint nodes EP1, EP2, EP4 and EP5, resulting in the second router R2 being in common with the fourth endpoint node EP4 and the fifth endpoint node EP5.
4. The EP4 router list is compared with the respective router list of the other four endpoint nodes EP1, EP2, EP3 and EP5, resulting in the same common router R3 as the comparison performed for EP1 and the same common router R2 as the comparison performed for EP3; no new information is hence revealed in addition to that of the previous steps.
5. The EP5 router list is compared with the respective router list of the other four endpoint nodes EP1, EP2, EP3 and EP4, resulting in the same common router R3 as the comparison performed for EP1 and the same common router R2 as the comparison performed for EP3; no new information is hence revealed in addition to that of the previous steps.

Finally, in step S103, the endpoint nodes having at least one router in common among the t selected routers closest to the respective endpoint node is categorized as belonging to a same site.

Hence, as deducted under items 1 and 3 in the above:
(a) endpoint nodes EP1, EP2, EP4 and EP5 have router R3 in common and are thus categorized to belong to the same site. This site will be referred to as Si; and
(b) endpoint nodes EP3, EP4 and EP5 have router R2 in common and are thus categorized to belong to the same site, which is the site referred to as Si in which EP4 and EP5 already has been categorized according to item (a).

As a result, in the exemplifying embodiment of Figure 2, all the endpoint nodes EP1-EP5 will be categorized in the same site S1.

In an embodiment, in case two or more of the plurality of endpoints nodes previously were considered to be located in different sites, they are merged into the same site if they have at least one routing node in common among the selected number or routers.

The parameter t could be selected by a network manager, typically depending on the structure of the network 20. From a general point of view, a greater value of t results in a greater number of endpoint nodes being classified as belonging to the same site. If t = 1, only endpoint nodes connected to the same router are classified as belonging to the same site.

With further reference to Figure 2, the method of categorizing endpoint nodes in sites according to embodiments of the present invention is performed in a device such as the network analysis server 21, or any other appropriate network node. In practice, the method at the network analysis server 21 is performed by a processing unit 22 embodied in the form of one or more microprocessors arranged to execute a computer program 23 downloaded to a suitable storage medium 24 associated with the microprocessor, such as a Random Access Memory (RAM), a Flash memory or a hard disk drive. Thus, as is illustrated by means of dashed lines in Figure 2, the processing unit 22 and the storage medium are included in the network analysis server 21. The processing unit 22 is arranged to carry out the method according to embodiments of the present invention when the appropriate computer program 23 comprising computer-executable instructions is downloaded to the storage medium 24 and executed by the processing unit 22. The storage medium 24 may also be a computer program product comprising the computer program 23. Alternatively, the computer program 23 may be transferred to the storage medium 24 by means of a suitable computer program product, such as a Digital Versatile Disc (DVD) or a memory stick. As a further alternative, the computer program 23 may be downloaded to the storage medium 24 over a network. The processing unit 22 may alternatively be embodied in the form of a digital signal processor (DSP), an application specific integrated circuit (ASIC), a field-programmable gate array (FPGA), a complex programmable logic device (CPLD), etc. Further, even though not shown in Figure 2, the endpoint nodes EP1-EP5 and the routers R1-R5 typically comprise a corresponding processing unit and memory unit comprising a computer program executable by the processing unit.

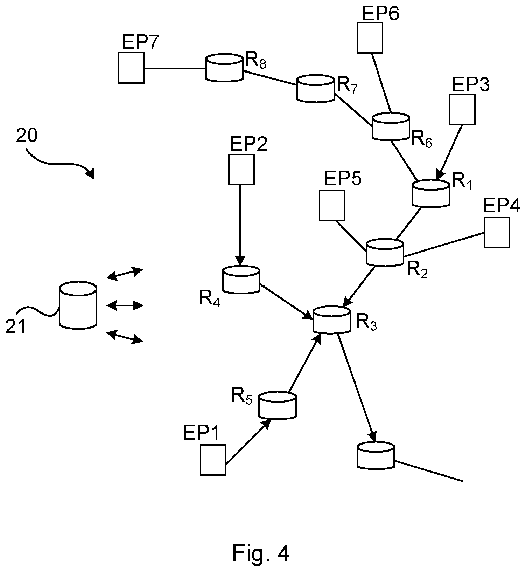

Figure 4 illustrates a further embodiment of the present invention, where a further three routers R6, R7, R8 and two endpoint nodes EP6, EP7 have been added to the communications network 20.

Again, a route is traced from the respective endpoint node via a number of routers in the communications network 20 and information identifying encountered routers in the respective route is reported to the network analysis server 21.

Thereafter, a comparison of the acquired information for a selected number (t = 2) of routers closest to the respective endpoint node for each traced route will be performed by the network analysis server 21, in order to identify router(s) common to the respective traced route.

Thus, as in the example illustrated with reference to Figures 2 and 3, the first endpoint node EP1 performs a route trace via the fifth router R5 and the third router R3, the second endpoint node EP2 performs a route trace via the fourth router R4 and the third router R3, and so on. Table 2 in the below summarizes the routers identified in each traced route in Figure 4 for t = 2.

**Table 2.**

| Endpoint node | Routers encountered for t = 2 (router list) |
|---|---|
| EP1 | R5, R3 |
| EP2 | R4, R3 |
| EP3 | R1, R2 |
| EP4 | R2, R3 |
| EP5 | R2, R3 |
| EP6 | R6, R1 |
| EP7 | R8, R7 |

Based on the information of Table 2, a pairwise comparison is performed by the network analysis server 21 for each endpoint node, where it initially can be concluded that the first endpoint node EP1 has the third router R3 in common with EP2, EP4 and EP5, but has no routers in common with the third endpoint node EP3, the sixth endpoint node EP6 and the seventh endpoint node EP7.

The encountered routers of each endpoint node are compared to the encountered routers of each of the other endpoint nodes, i.e. the router list for each endpoint node is compared to the router list of each of the other endpoint nodes. Thus:
1. The EP1 router list is compared (as just described) with the respective router list of the other six endpoint nodes EP2, EP3, EP4, EP5, EP6 and EP7, resulting in EP1 having the third router R3 in common with EP2, EP4 and EP5.
2. The EP2 router list is compared with the respective router list of the other six endpoint nodes EP1, EP3, EP4, EP5, EP6 and EP7, resulting in the same common router R3 as the comparison performed for EPi; no new information is hence revealed in addition to that of the previous step.
3. The EP3 router list is compared with the respective router list of the other six endpoint nodes EP1, EP2, EP4, EP5, EP6 and EP7, resulting in the second router R2 being in common with the fourth endpoint node EP4 and the fifth endpoint node EP5, as well as the first router R1 in common with the sixth endpoint node EP6.
4. The EP4 router list is compared with the respective router list of the other six endpoint nodes EP1, EP2, EP3, EP5, EP6 and EP7, resulting in the same common router R3 as the comparison performed for EP1 and the same common router R2 as the comparison performed for EP3; no new information is hence revealed in addition to that of the previous steps.
5. The EP5 router list is compared with the respective router list of the other six endpoint nodes EP1, EP2, EP3, EP4, EP6 and EP7, resulting in the same common router R3 as the comparison performed for EP1 and the same common router R2 as the comparison performed for EP3; no new information is hence revealed in addition to that of the previous steps.
6. The EP6 router list is compared with the respective router list of the other six endpoint nodes EP1, EP2, EP3, EP4, EP5 and EP7, resulting in the same common router R1 as the comparison performed for EP3; no new information is hence revealed in addition to that of the previous steps.
7. The EP7 router list is compared with the respective router list of the other six endpoint nodes EP1, EP2, EP3, EP4, EP5 and EP6, resulting in no common routers.

Finally, the endpoint nodes having at least one router in common among the t selected routers closest to the respective endpoint node is classified as belonging to a same site.

Hence, as deducted under items 1 and 3 in the above:
(a) endpoint nodes EP1, EP2, EP4 and EP5 have router R3 in common and are thus categorized to belong to the same site. This site will be referred to as Si;
(b) endpoint nodes EP3, EP4 and EP5 have router R2 in common and are thus categorized to belong to the same site, which is the site referred to as Si in which EP4 and EP5 already has been classified according to item (a); and
(c) endpoint nodes EP3 and EP6 have router R1 in common and are thus categorized to belong to the same site, which is the site referred to as Si in which EP3 already has been classified according to item (b).

As a result, in the exemplifying embodiment of Figure 4, all the endpoint nodes EP1-EP6 but one will be classified in the same site Si.

Endpoint node R7 does not have any common routers with the remaining endpoint nodes for t= 2, and is thus not categorized to belong to site Si.

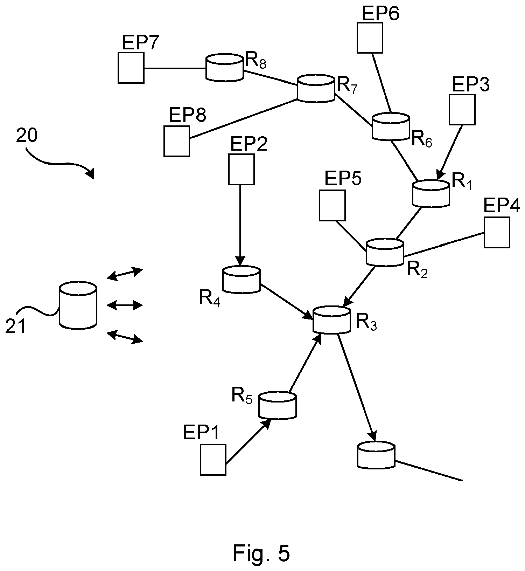

With reference to Figure 5, a further endpoint node EP8 has been connected to the router R7. In this scenario, endpoint node EP8 will be classified to belong to the site Si via router R6 common with EP6. Consequently, endpoint node EP7 will also be considered to form part of the site Si via its common router R7 with the endpoint node EP9.

In still a further embodiment of the present invention, again with reference to Figure 5, a concept of key routers is introduced. A key router is a first router encountered which an endpoint node has in common with other endpoint nodes, excluding the router to which the endpoint node is directly connected. In other words, as previously has been discussed, each router and the endpoint nodes connected to it form a subnet in the communications network. In this particular embodiment, a firstly encountered router in a traced route being in common to at least two subnets is identified.

Thus, as can be seen in Figure 5, for the subnets formed by the second endpoint node EP2 and its associated fourth router R4, and by the first endpoint node EP1 and its associated fifth router R5, respectively, the first common router is the third router R3. The third router R3 is hence the key router for these two subnets, and the endpoint nodes EP1 and EP2 are thus classified as belonging to the same site. Further, the subnet formed by the fourth and fifth endpoints EP4 and EP5 and the second router R2 also has the third router R3 in common with the first and second endpoints EP1 and EP2, and so on. In this respect, the third router R3 is the key router for the three subnets formed by R2, R4 and R5, respectively, and the associated endpoint nodes EP1, EP2, EP4 and EP5 are thus categorized to belong to the same site.

In an embodiment of the present invention, after the identification of key routers, a pairwise comparison is performed for all the in the communications network 20. If any two subnets have the same key router, they are considered to belong to the same site. Consequently, if two subnets that were earlier identified to be in two different sites share the same key router, then these two sites are merged together into a single site and all the endpoint nodes in these two previously separate sites now belong to the new merged site.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method of categorizing endpoint nodes into sites in a communications network (20), the method comprising:
acquiring (S101) information pertaining to tracing of a route of each of a plurality of the endpoint nodes (EP1-EP5) via a number of routing nodes (Ri-R5) in the communications network, said information identifying the routing nodes encountered in each traced route; the method being **characterized in that** it further comprises:
performing (S102) a comparison, for each of the plurality of endpoint nodes with the remaining ones of the plurality of endpoint nodes, of the acquired information for a selected number (t) of routing nodes closest to the endpoint node for each traced route; and
categorizing (S103) the endpoint nodes having at least one routing node in common among the selected number of routing nodes as belonging to a same site.

2. The method of claim 1, wherein the step of performing a comparison comprises performing a pairwise comparison between each individual endpoint node (EP1-EP5) and the remaining endpoint nodes.

3. The method of any one of claims 1 or 2, wherein in case two or more of the plurality of endpoints nodes (EP1-EP5) are in different sites, said two or more of the plurality of endpoint nodes are merged into the same site if they have at least one routing node (R1-R5) in common among the selected number (t) of routing nodes.

4. The method of any one of the preceding claims, wherein for each routing node (R1-R5) and the endpoint nodes (EP1-EP5) connected to said each routing node a separate subnet is formed in the communications network (20), the method further comprising:
identifying a firstly encountered routing node in a traced route being in common to at least two subnets; and
categorizing the endpoint nodes of said at least two subnets as belonging to the same site.

5. The method of claim 4, further comprising:
performing a comparison of the identified firstly encountered routing node (R1-R5) of each subnet with the identified firstly encountered routing node of the remaining subnets.

6. A device (21) configured to categorize endpoint nodes (EP1-EP5) into sites in a communications network (20), the device comprising a processing unit (22) being configured to:
acquire information pertaining to tracing of a route of each of a plurality of the endpoint nodes (EP1-EP5) via a number of routing nodes (R1-R5) in the communications network, said information identifying the routing nodes encountered in each traced route; the device (21) further being **characterized in that** the processing unit (22) is configured to:
perform a comparison, for each of the plurality of endpoint nodes with the remaining ones of the plurality of endpoint nodes, of the acquired information for a selected number (t) of routing nodes closest to the endpoint node for each traced route; and
categorize the endpoint nodes having at least one routing node in common among the selected number of routing nodes as belonging to a same site.

7. The device (21) of claim 6, the processing unit (22) further being configured to perform a pairwise comparison between each individual endpoint node (EP1-EP5) and the remaining endpoint nodes.

8. The device (21) of any one of claims 6 or 7, the processing unit (22) further being configured to, in case two or more of the plurality of endpoints nodes (EP1-EP5) are in different sites, merge said two or more of the plurality of endpoint nodes into the same site if they have at least one routing node (R1-R5) in common among the selected number (t) of routing nodes.

9. The device (21) of any one of claims 6-8, wherein for each routing node (R1-R5) and the endpoint nodes (EP1-EP5) connected to said each routing node a separate subnet is formed in the communications network (20), processing unit (22) further being configured to:
identify a firstly encountered routing node in a traced route being in common to at least two subnets; and
categorize the endpoint nodes of said at least two subnets as belonging to the same site.

10. The device (21) of claim 9, the processing unit (22) further being configured to:
perform a comparison of the identified firstly encountered routing node (R1-R5) of each subnet with the identified firstly encountered routing node of the remaining subnets.

11. A computer program (23) comprising computer-executable instructions causing a device (21) to perform the method of any one of claims 1-5 when the computer-executable instructions are executed on a processing unit (22) included in the device.

12. A computer program product comprising a computer readable medium (24), the computer readable medium having the computer program (23) according to claim 11 embodied therein.

## Patentansprüche

1. Verfahren zum Einstufen von Endpunktknoten in Standorte in einem Datenübertragungsnetzwerk (20), wobei das Verfahren umfasst:
Erfassen (S101) von Informationen, die ein Verfolgen einer Route von jedem aus einer Mehrzahl der Endpunktknoten (EP1 bis EP5) über eine Anzahl von Routing-Knoten (R1 bis R5) in dem Datenübertragungsnetzwerk betreffen, wobei die Informationen die auf jeder verfolgten Route angetroffenen Routing-Knoten bezeichnen; wobei das Verfahren **dadurch gekennzeichnet ist, dass** es ferner umfasst:
Durchführen (S102) eines Vergleichs, für jeden aus der Mehrzahl von Endpunktknoten mit den verbleibenden aus der Mehrzahl von Endpunktknoten, der erfassten Informationen für eine ausgewählte Anzahl (t) von Routing-Knoten, die dem Endpunktknoten für jede verfolgte Route am nächsten sind; und
Einstufen (S103) der Endpunktknoten, die mindestens einen Routing-Knoten unter der ausgewählten Anzahl von Routing-Knoten gemeinsam haben, als zu demselben Standort gehörend.

2. Verfahren nach Anspruch 1, wobei der Schritt eines Durchführens eines Vergleichs ein Durchführen eines paarweisen Vergleichs zwischen jedem einzelnen Endpunktknoten (EP1 bis EP5) und den verbleibenden Endpunktknoten umfasst.

3. Verfahren nach einem der Ansprüche 1 oder 2, wobei in dem Fall, dass sich zwei oder mehr aus der Mehrzahl von Endpunktnoten (EP1 bis EP5) an unterschiedlichen Standorten befinden, die zwei oder mehr aus der Mehrzahl von Endpunktnoten an demselben Standort zusammengeführt werden, wenn sie mindestens einen Routing-Knoten (R1 bis R5) unter der ausgewählten Anzahl (t) von Routing-Knoten gemeinsam haben.

4. Verfahren nach einem der vorhergehenden Ansprüche, wobei für jeden Routing-Knoten (R1 bis R5) und die Endpunktknoten (EP1 bis EP5), die mit dem Routing-Knoten verbunden sind, ein separates Teilnetz in dem Datenübertragungsnetzwerk (20) gebildet wird, wobei das Verfahren ferner umfasst:
Erkennen eines zuerst angetroffenen Routing-Knotens auf einer verfolgten Route, der mindestens zwei Teilnetzen gemeinsam ist; und
Einstufen der Endpunktknoten der mindestens zwei Teilnetze als zu demselben Standort gehörend.

5. Verfahren nach Anspruch 4, das ferner umfasst:
Durchführen eines Vergleichs des erkannten zuerst angetroffenen Routing-Knotens (R1 bis R5) jedes Teilnetzes mit dem erkannten zuerst angetroffenen Routing-Knoten der verbleibenden Teilnetze.

6. Einrichtung (21), die derart konfiguriert ist, dass sie Endpunktnoten (EP1 bis EP5) in Standorte in einem Datenübertragungsnetzwerk (20) einstuft, wobei die Einrichtung eine Verarbeitungseinheit (22) umfasst, die konfiguriert ist zum:
Erfassen von Informationen, die ein Verfolgen einer Route von jedem aus einer Mehrzahl der Endpunktknoten (EP1 bis EP5) über eine Anzahl von Routing-Knoten (R1 bis R5) in dem Datenübertragungsnetzwerk betrifft,
wobei die Informationen die auf jeder verfolgten Route angetroffenen Routing-Knoten bezeichnen; wobei die Einrichtung (21) ferner **dadurch gekennzeichnet ist,**
**dass** die Verarbeitungseinheit (22) konfiguriert ist zum:
Durchführen eines Vergleichs, für jeden aus der Mehrzahl von Endpunktknoten mit den verbleibenden aus der Mehrzahl von Endpunktknoten, der erfassten Informationen für eine ausgewählte Anzahl (t) von Routing-Knoten, die den Endpunktknoten für jede verfolgte Route am nächsten sind; und
Einstufen der Endpunktknoten, die unter der ausgewählten Anzahl von Routing-Knoten mindestens einen Routing-Knoten gemeinsam haben, als zu demselben Standort gehörend.

7. Einrichtung (21) nach Anspruch 6, wobei die Verarbeitungseinheit (22) ferner derart konfiguriert ist, dass sie einen paarweisen Vergleich zwischen jedem einzelnen Endpunktknoten (EP1 bis EP5) und den verbleibenden Endpunktknoten durchführt.

8. Einrichtung (21) nach einem der Ansprüche 6 oder 7, wobei die Verarbeitungseinheit (22) ferner derart konfiguriert ist, dass sie in dem Fall, dass sich zwei oder mehr aus der Mehrzahl von Endpunktnoten (EP1 bis EP5) an unterschiedlichen Standorten befinden, die zwei oder mehr aus der Mehrzahl von Endpunktnoten an demselben Standort zusammenführt, wenn sie mindestens einen Routing-Knoten (R1 bis R5) unter der ausgewählten Anzahl (t) von Routing-Knoten gemeinsam haben.

9. Einrichtung (21) nach einem der Ansprüche 6 bis 8, wobei für jeden Routing-Knoten (R1 bis R5) und die Endpunktknoten (EP1 bis EP5), die mit dem Routing-Knoten verbunden sind, ein separates Teilnetz in dem Datenübertragungsnetzwerk (20) gebildet wird, wobei die Verarbeitungseinheit (22) ferner konfiguriert ist zum:
Erkennen eines zuerst angetroffenen Routing-Knotens auf einer verfolgten Route, der mindestens zwei Teilnetzen gemeinsam ist; und
Einstufen der Endpunktknoten der mindestens zwei Teilnetze als zu demselben Standort gehörend.

10. Einrichtung (21) nach Anspruch 9, wobei die Verarbeitungseinheit (22) ferner konfiguriert ist zum:
Durchführen eines Vergleichs des erkannten zuerst angetroffenen Routing-Knotens (R1 bis R5) jedes Teilnetzes mit dem erkannten zuerst angetroffenen Routing-Knoten der verbleibenden Teilnetze.

11. Computerprogramm (23), das durch Computer ausführbare Anweisungen umfasst, die eine Einrichtung (21) zum Durchführen des Verfahrens nach einem der Ansprüche 1 bis 5 veranlassen,
wenn die durch Computer ausführbaren Anweisungen auf einer Verarbeitungseinheit (22) ausgeführt werden, die zu der Einrichtung zählt.

12. Computerprogrammprodukt, das ein computerlesbares Medium (24) umfasst, wobei das Computerprogramm (23) nach Anspruch 11 in dem computerlesbaren Medium verkörpert ist.

## Revendications

1. Procédé de catégorisation de noeuds de point d'extrémité en des sites dans un réseau de communication (20), le procédé comprenant de :
acquérir (S101) une information se rapportant au traçage d'une route de chacun d'une pluralité de noeuds de point d'extrémité (EP1-EP5) via un nombre de noeuds de routage (R1-R5) dans le réseau de communication,
ladite information identifiant les noeuds de routage rencontrés dans chaque route tracée ; le procédé étant **caractérisé en ce qu'**il comprend en outre de :
effectuer (S102) une comparaison, pour chacun de la pluralité de noeuds de point d'extrémité avec les noeuds restants de la pluralité de noeuds de point d'extrémité, de l'information acquise pour un nombre sélectionné (t) de noeuds de routage les plus proches du noeud de point d'extrémité pour chaque route tracée ; et
catégoriser (S103) les noeuds de point d'extrémité ayant au moins un noeud de routage en commun parmi le nombre sélectionné de noeuds de routage comme appartenant à un même site.

2. Procédé selon la revendication 1, dans lequel l'étape consistant à effectuer une comparaison comprend d'effectuer une comparaison par paire entre chaque noeud de point d'extrémité individuel (EP1-EP5) et les noeuds de point d'extrémité restants.

3. Procédé selon une quelconque des revendications 1 ou 2, dans lequel au cas où deux ou plus de la pluralité de noeuds de point d'extrémité (EP1-EP5) sont dans des sites différents, lesdits deux ou plus de la pluralité de noeuds de point d'extrémité sont fusionnés en le même site si ils ont au moins un noeud de routage (R1-R5) en commun parmi le nombre sélectionné (t) de noeuds de routage.

4. Procédé selon une quelconque des revendications précédentes, dans lequel pour chaque noeud de routage (R1-R5) et les noeuds de point d'extrémité (EP1-EP5) connectés à chaque dit noeud de routage, un sous-réseau séparé est formé dans le réseau de communication (20), le procédé comprenant en outre de :
identifier un noeud de routage rencontré en premier dans une route tracée étant en commun avec au moins deux sous-réseaux ; et
catégoriser les noeuds de point d'extrémité desdits au moins deux sous-réseaux comme appartenant au même site.

5. Procédé selon la revendication 4, comprenant en outre de :
effectuer une comparaison du noeud de routage (R1-R5) identifié rencontré en premier de chaque sous-réseau avec le noeud de routage identifié rencontré en premier des sous-réseaux restants.

6. Dispositif (21) configuré pour catégoriser des noeuds de point d'extrémité (EP1-EP5) en sites dans un réseau de communication (20), le dispositif comprenant une unité de traitement (22) étant configurée pour :
acquérir une information se rapportant au traçage d'une route de chacun d'une pluralité de noeuds de point d'extrémité (EP1-EP5) via un nombre de noeuds de routage (R1-R5) dans le réseau de communication,
ladite information identifiant les noeuds de routage rencontrés dans chaque route tracée ; le dispositif (21) étant **caractérisé en ce que** l'unité de traitement (22) est configurée pour :
effectuer une comparaison, pour chacun de la pluralité de noeuds de point d'extrémité avec les noeuds restants de la pluralité de noeuds de point d'extrémité, de l'information acquise pour un nombre sélectionné (t) de noeuds de routage les plus proches du noeud de point d'extrémité pour chaque route tracée ; et
catégoriser les noeuds de point d'extrémité ayant au moins un noeud de routage en commun parmi le nombre sélectionné de noeuds de routage comme appartenant à un même site.

7. Dispositif (21) selon la revendication 6, l'unité de traitement (22) étant en outre configurée pour effectuer une comparaison par paire entre chaque noeud de point d'extrémité individuel (EP1-EP5) et les noeuds de point d'extrémité restants.

8. Dispositif (21) selon une quelconque des revendications 6 ou 7, l'unité de traitement (22) étant en outre configurée pour, au cas où deux ou plus de la pluralité de noeuds de point d'extrémité (EP1-EP5) sont dans des sites différents, fusionner lesdits deux ou plus de la pluralité de noeuds de pont d'extrémité en le même site si ils ont au moins un noeud de routage (R1-R5) en commun parmi le nombre sélectionné (t) de noeuds de routage.

9. Dispositif (21) selon une quelconque des revendications 6-8, dans lequel pour chaque noeud de routage (R1-R5) et les noeuds de point d'extrémité (EP1-EP5) connectés à chaque dit noeud de routage, un sous-réseau séparé est formé dans le réseau de communication (20), l'unité de traitement (22) étant en outre configurée pour:
identifier un noeud de routage rencontré en premier dans une route tracée étant en commun avec au moins deux sous-réseaux ; et
catégoriser les noeuds de point d'extrémité desdits au moins deux sous-réseaux comme appartenant au même site.

10. Dispositif (21) selon la revendication 9, l'unité de traitement (22) étant en outre configurée pour :
effectuer une comparaison du noeud de routage (R1-R5) identifié rencontré en premier de chaque sous-réseau avec le noeud de routage identifié rencontré en premier des sous-réseaux restants.

11. Programme informatique (23) comprenant des instructions exécutables par ordinateur amenant un dispositif (21) à mettre en oeuvre le procédé selon une quelconque des revendications 1-5 lorsque les instructions exécutables par ordinateur sont exécutées sur une unité de traitement (22) incluse dans le dispositif.

12. Produit de programme informatique comprenant un support lisible par ordinateur (24), le support lisible par ordinateur renfermant le programme informatique (23) selon la revendication 11.
